(19) Europäisches Patentamt

European Patent Office

Office européen des brevets

(11) **EP 4 745 991 A1**

(12) **EUROPEAN PATENT APPLICATION**
published in accordance with Art. 153(4) EPC

(43) Date of publication:
20.05.2026 Bulletin 2026/21

(21) Application number: 24830503.9

(22) Date of filing: 12.06.2024

(51) International Patent Classification (IPC):
*G21C 3/33* (2006.01)

(52) Cooperative Patent Classification (CPC):
Y02E 30/30

(86) International application number:
PCT/CN2024/098791

(87) International publication number:
WO 2025/001857 (02.01.2025 Gazette 2025/01)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 30.06.2023 CN 202310799533

(71) Applicant: China Nuclear Power Technology
Research Institute
Co., Ltd
Shenzhen, Guangdong 518031 (CN)

(72) Inventors:
• SU, Wen
Shenzhen, Guangdong 518031 (CN)
• LI, Kangqiao
Shenzhen, Guangdong 518031 (CN)
• LI, Weicai
Shenzhen, Guangdong 518031 (CN)
• ZHANG, Yuxiang
Shenzhen, Guangdong 518031 (CN)
• YAN, Jingwen
Shenzhen, Guangdong 518031 (CN)
• XUE, Zhe
Shenzhen, Guangdong 518031 (CN)
• LU, Yaheng
Shenzhen, Guangdong 518031 (CN)
• TANG, Yangyang
Shenzhen, Guangdong 518031 (CN)

(74) Representative: Westphal, Mussgnug & Partner,
Patentanwälte mbB
Werinherstraße 79
81541 München (DE)

(54) **FIXED RELATED ASSEMBLY OF NUCLEAR REACTOR CORE**

(57) A fixed related assembly of a nuclear reactor core, comprising functional rods (1) for being inserted into guide tubes of a fuel assembly (3) to achieve different functions, and a pressing system (2) for fixing and connecting the functional rods (1). The pressing system (2) comprises a central cylinder (21) having an inner cavity, and a supporting plate (22); the supporting plate (22) is fixedly connected to the central cylinder (21); the inner cavity of the central cylinder (21) comprises a first cavity (211). The pressing system (2) further comprises a pressing structure (23); the pressing structure (23) comprises a pressing rod (231), a pressing spring (232), and a spring seat (233); the pressing spring (232) fills the first cavity (211); one end of the spring seat (233) penetrates into the first cavity (211) and abuts against the lower end of the pressing spring (232), and the other end of the spring seat (233) is used for pressing against an upper tube seat of the fuel assembly (3); the pressing rod (231) is fixedly connected to the central cylinder (21), and is located at the side of the supporting plate (22) away from the spring seat (233); the pressing rod (231) is used for abutting against the side of a reactor core upper plate (4) of a nuclear reactor core close to the fuel assembly (3), so as to prevent a related assembly from axially moving.

EP 4 745 991 A1

Fig.2]

**Description**

TECHNICAL FIELD

The present invention relates to the field of reactor technology, and more particularly to a fixed associated assembly of nuclear reactor core.

THE RELATED ART

Reactor core associated assembly can be classified into control rod assembly and fixed associated assembly. The fixed associated assembly, based on their function, can be divided into primary neutron source assembly, secondary neutron source assembly, cylinder plug assembly, etc. The fixed associated assembly is composed of a hold-down system and functional rods (which can be categorized into primary neutron source rods, secondary neutron source rods, cylinder plug rods, etc).

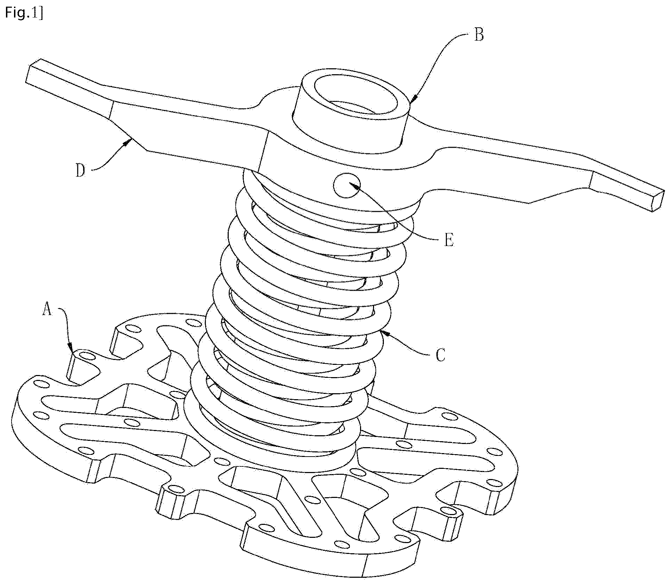

In the prior art, the structure of the hold-down system of the fixed associated assembly is shown in Figure 1. It comprises a support plate A, a guide cylinder B, a pressing spring assembly C, and a pressing rod D. The support plate A of the hold-down system has a square plate-like structure, with water holes designed in the middle and positioning holes for installing the associated rods. The guide cylinder B is a cylindrical structure with two symmetrical guide slots on its tube wall. The guide slots are cooperated with the pressing rod D via a pin E to limit the compression travel of the spring. The pressing rod D has a conjugate symmetrical structure, consisting of a ring with a central hole and conjugate rods on both sides. The pressing spring assembly C comprises a pair of double-layer springs. The pressing spring assembly C is sleeved over the guide cylinder B, with its upper end limited by the pressing rod D and its lower end seated on the support plate A. The lower part of the guide cylinder B passes through the center hole of the support plate A and is fixed to the support plate A by welding. The upper part of the guide cylinder B is inserted into the pressing rod D, and the axial travel of the pressing rod D is restricted within the range of the pin slot on the guide cylinder by the pin E.

When the hold-down system of the prior art operates within the nuclear reactor, the bottom of the hold-down system remains in constant contact with the upper tube seat of the fuel assembly, while the top of the hold-down system maintains contact with the nuclear core upper plate via the pressing rod D. During the irradiation-induced growth of the fuel assembly, as the gap between the upper tube seat and the nuclear core upper plate gradually decreases, the pressing rod D moves downward relative to the guide cylinder B, compressing the pressing spring assembly C. Consequently, the pressing spring assembly C continuously applies a downward pressing force on the support plate. To ensure that the associated assembly does not lift under the hydraulic lifting force during reactor operation, the pressing force must satisfy the following condition:

Pressing force + Weight of the associated assembly > Hydraulic lifting force

In the above formula, the hydraulic lifting force acting on the associated assembly is generally much greater than its weight. Therefore, the spring must be greater than (Hydraulic lifting force - Weight), necessitating a relatively large pressing force.

SUMMARY OF THE INVENTION

The technical problem that the present invention is made to overcome is to provide a fixed associated assembly of nuclear reactor core in view of the defects of the prior art.

A technical solution that the present invention adopts to overcome the technical problem is: a fixed associated assembly of nuclear reactor core, comprising functional rods configured to be inserted into guide cylinders of a fuel assembly to achieve different functions and a hold-down system for securing and connecting the functional rods, the hold-down system comprises a central cylinder having an internal cavity and a supporting plate fixedly connected to the central cylinder;

the internal cavity of the central cylinder comprises a first cavity, and the hold-down system further comprises a hold-down structure, the hold-down structure comprising a hold-down rod, a hold-down spring, and a spring seat;

the hold-down spring is filled within the first cavity, one end of the spring seat is installed into the first cavity and abuts against a lower end of the hold-down spring, and the other end of the spring seat is configured to press against an upper tube seat of the fuel assembly, the hold-down rod is fixedly connected to the central cylinder and is located on a side of the supporting plate away from the spring seat; and the hold-down rod is configured to abut against a side of a reactor core upper plate of the nuclear reactor core that is close to the fuel assembly, so as to prevent axial movement of the associated assembly.

In some embodiments, a stop member is provided within the first cavity, and the stop member abuts against an upper end of the hold-down spring.

In some embodiments, the fuel assembly undergoes irradiation growth during reactor operation, a gap between the fuel assembly and the reactor core upper plate decreases, and the spring seat moves along an axis of the first cavity towards the hold-down rod, thereby compressing the hold-down spring.

In some embodiments, an end of the spring seat proximate to the first cavity is provided with a limiting protrusion, a limiting member is provided on a wall of the first cavity, the limiting protrusion abuts against the limiting member to prevent the spring seat from disengaging from the first cavity.

In some embodiments, the internal cavity of the central cylinder further comprises a second cavity in communication with the first cavity, the second cavity being located farther from the supporting plate than the first cavity; wherein a wall of the second cavity is provided with a lifting groove.

In some embodiments, the central cylinder comprises a first cylinder body and a second cylinder body, wherein the supporting plate is fixedly connected to the second cylinder body; an internal cavity of the first cylinder body comprises a first sub-cavity, and an internal cavity of the second cylinder body comprises a second sub-cavity, and when the first cylinder body and the second cylinder body are connected to form the central cylinder, the first sub-cavity and the second sub-cavity are in communication with each other to form the first cavity.

In some embodiments, the second cylinder body comprises at least two sub-cylinder bodies, each sub-cylinder body has a cavity running therethrough axially, when the plurality of sub-cylinder bodies are connected to form the second cylinder body, the cavities of the plurality of sub-cylinder bodies are in communication with each other to form the second sub-cavity.

In some embodiments, the first cylinder body and the second cylinder body are connected by circumferential welding.

In some embodiments, the sub-cylinder bodies are connected to each other by circumferential welding.

In some embodiments, the supporting plate is provided with through holes for coolant to pass through; and/or the supporting plate is further provided with mounting holes for the functional rods to pass through.

The implementation of the present invention has the following beneficial effects: a fixed associated assembly of nuclear reactor core adopting the present invention can reduce the hold-down force borne by the hold-down system, extend the service life of the hold-down system, and also reduce the pressure drop of the coolant flowing through the assembly, thereby improving the cooling effect of the coolant and ensuring the stable operation of the nuclear reactor.

BRIEF DESCRIPTION OF THE DRAWINGS

The present invention will now be described in further detail with reference to the accompanying drawings and embodiments. In the drawings:

Figure 1 is a schematic diagram of a hold-down system of a fixed associated assembly according to the prior art.

Figure 2 is a schematic diagram of a fixed associated assembly of nuclear reactor core according to an embodiment of the present invention.

Figure 3 is a schematic diagram of a hold-down system according to an embodiment of the present invention.

Figure 4 is a cross-sectional view of the hold-down system according to an embodiment of the present invention.

Figure 5 is a schematic diagram illustrating a nuclear core upper plate, a fixed associated assembly of nuclear reactor core, and the fuel assembly during reactor operation according to an embodiment of the present invention.

Figure 6 is a cross-sectional view illustrating a central cylinder, being segmented above the hold-down rod, of the hold-down system according to an embodiment of the present invention.

Figure 7 is a cross-sectional view illustrating a central cylinder, being divided into several sections, of the hold-down system according to an embodiment of the present invention.

EMBODIMENTS FOR IMPLEMENTING THE INVENTION

To provide a clearer understanding of the technical features, objectives, and effects of the present invention, the specific embodiments of the invention are described in detail below with reference to the accompanying drawings. In the following description, it should be understood that directional or positional relationships indicated by terms such as "front," "rear," "up," "down," "left," "right," "longitudinal," "transverse," "vertical," "horizontal," "top," "bottom," "inner," "outer," "head," and "tail" are based on the orientations or positional relationships shown in the drawings. These orientations are defined for convenience in describing the technical solutions and do not imply that the referred apparatus or elements must have a specific orientation. Thus, they should not be construed as limiting the invention.

It should also be noted that unless otherwise explicitly specified and defined, terms such as "mounted," "connected," "coupled," "fixed," and "arranged" should be interpreted broadly. For example, a connection may be a fixed connection, a detachable connection, or an integral connection; it may be a mechanical connection, an electrical connection, or a direct connection, or may be achieved indirectly through an intermediate medium. It may refer to the internal communication between two elements or their interactive relationships. When an element is referred to as being "on" or "under" another element, it may be directly or indirectly located above or below the other element, with one or more intermediate elements possibly present. Terms such as "first," "second," and "third" are used merely to facilitate describing the technical solutions and should not be interpreted as indicating relative importance or implicitly specifying the quantity of the indicated technical features. Thus, features defined by "first," "second," etc., may explicitly or implicitly include one or more of such features. Those skilled in the art can understand the specific meanings of the above terms in the context of the present invention based on practical situations.

In the following description, for illustrative rather than limiting purposes, specific details such as particular system structures and techniques are set forth to facilitate a thorough understanding of the embodiments of the invention. However, it will be apparent to those skilled in the art that the invention may be practiced in other embodiments without these specific details. In other instances, detailed descriptions of well-known systems, devices, circuits, and methods are omitted to avoid unnecessary details obscuring the description of the invention.

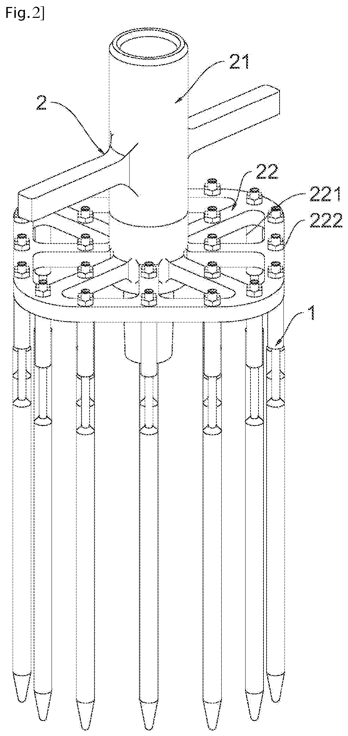

Figures 2 to 7 illustrate a fixed associated assembly of nuclear reactor core according to some embodiments of the present invention. This fixed associated assembly of nuclear reactor core comprises functional rods 1 and a hold-down system 2. The functional rods 1 is configured to be inserted into guide cylinders of a fuel assembly 3 to achieve different functions, and the hold-down system 2 is used to secure and connect the functional rods 1.

Consequently, the fixed associated assembly of nuclear reactor core of the present invention can reduce the hold-down force borne by the hold-down system 2, extend the service life of the hold-down system 2, and also reduce the pressure drop of the coolant flowing through the assembly, thereby improving the cooling effect of the coolant and ensuring the stable operation of the nuclear reactor.

The hold-down system 2 comprises a central cylinder 21 with an internal cavity, a supporting plate 22, and a hold-down structure 23. As shown in Figures 2 to 4, the supporting plate 22 is fixedly connected to the central cylinder 21. It should be noted that the term "fixedly connected" as used in the embodiments of this application includes: the two being integrally formed; or the two being connected by means such as welding, riveting, fusion welding, or interference fit, wherein the two fixedly connected parts remain relatively stationary. The term "fixedly connected" mentioned hereinafter shall be interpreted similarly, including integral formation, and will not be repeated. In some embodiments, the supporting plate 22 and the central cylinder 21 may also be detachably connected, facilitating disassembly, assembly, and replacement, which is not limited herein.

The internal cavity of the central cylinder 21 includes a first cavity 211. The supporting plate 22 has a square plate-like structure. The supporting plate 22 is provided with through holes 221 for coolant passage; and/or, the supporting plate 22 is provided with mounting holes 222 for the functional rods 1 to pass through. For example, in some embodiments, the supporting plate 22 may be provided with through holes 221 for coolant passage, enabling the coolant to cool the nuclear reactor and maintain its stable operation. In other embodiments, the supporting plate 22 may also be provided with mounting holes 222 for the functional rods 1 to pass through. After passing through the mounting holes 222, the functional rods 1 are mounted and fixed within the mounting holes 222, allowing the hold-down system 2 to secure and connect the functional rods 1.

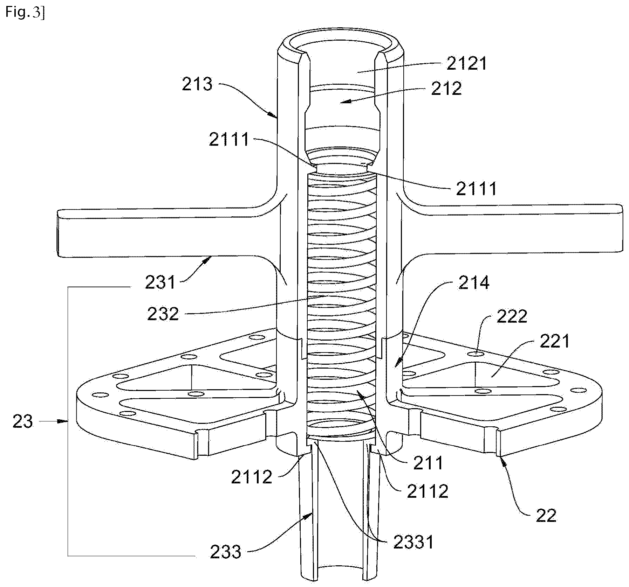

The hold-down structure 23 comprises a hold-down rod 231, a hold-down spring 232, and a spring seat 233. The hold-down spring 232 is filled within the first cavity 211. One end of the spring seat 233 extends into the first cavity 211 and abuts against the lower end of the hold-down spring 232, while the other end of the spring seat 233 is configured to press against an upper tube seat 31 of the fuel assembly 3. Specifically, referring to Figure 3, the hold-down spring 232 is inserted into the internal cavity and slidably mounted within the first cavity 211. To prevent the hold-down spring 232 from continuing to move upward along the internal cavity and exiting the central cylinder 21, a stop member 2111 is provided inside the first cavity 211. When the hold-down spring 232 is inserted into the first cavity 211, its upper end abuts against the stop member 2111, which prevents further upward movement of the hold-down spring 232 along the internal cavity of the central cylinder 21, thereby confining the hold-down spring 232 to expand and contract within the first cavity 211 and preventing it from disengaging.

Furthermore, referring to Figure 3, the end of the spring seat 233 near the first cavity 211 is provided with a limiting protrusion 2331. The wall of the first cavity 211 is also provided with a limiting member 2112, located at the lower end of the first cavity 211. When the spring seat 233 is installed into the first cavity 211, the limiting protrusion 2331 abuts against the limiting member 2112 to prevent the spring seat 233 from disengaging from the first cavity 211.

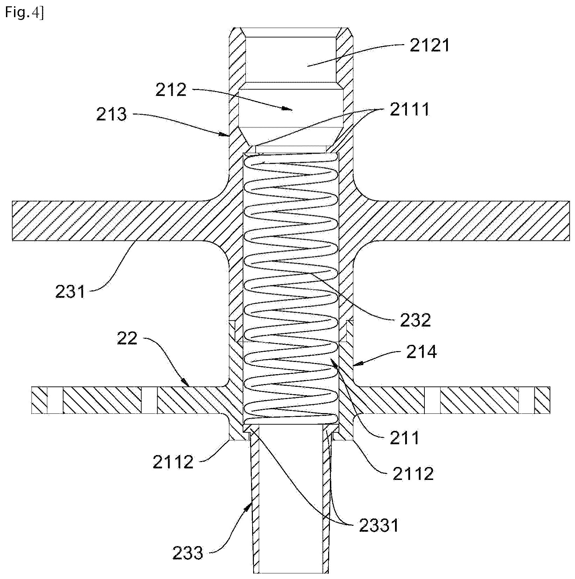

The hold-down rod 231 is fixedly connected to the central cylinder 21 and is located on the side of the supporting plate 22 away from the spring seat 233. The side of the hold-down rod 231 away from the supporting plate 22 is configured to abut against a side of a reactor core upper plate 4 of a nuclear reactor core that is close to the fuel assembly 3. In some embodiments, the hold-down rod 231 and the central cylinder 21 are integrally formed. Certainly, in other embodiments, the hold-down rod 231 and the central cylinder 21 may also be detachably connected. For example, as shown in Figures 3 and 4, the hold-down rod 231 is elongated and axially symmetrical with the central cylinder 21.

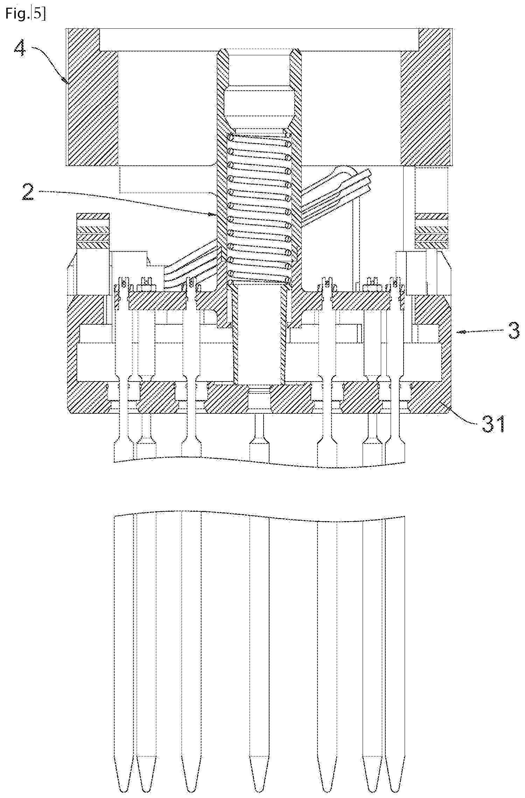

When the fixed associated assembly is installed into the nuclear reactor core, the upper end of the hold-down rod 231 abuts against the reactor core upper plate 4, and the lower end of the spring seat 233 abuts against the upper tube seat 31 of the fuel assembly 3. Specifically, as shown in Figure 5, the reactor core upper plate 4, the hold-down system 2, and the fuel assembly 3 are axially installed from top to bottom. The functional rods 1 is inserted into the guide cylinder of the fuel assembly 3, and the hold-down system 2 is used to secure the functional rods 1, maintaining it at a fixed axial height. During operation, the side of the spring seat 233 away from the hold-down spring 232 presses against the upper tube seat 31 of the fuel assembly 3, and the side of the hold-down rod 231 away from the supporting plate 22 abuts against the reactor core upper plate 4, thereby fixedly securing the hold-down system 2 between the upper tube seat 31 of the fuel assembly 3 and the reactor core upper plate 4.

During nuclear reactor operation, irradiation-induced growth of the fuel assembly 3 causes the gap between the fuel assembly 3 and the reactor core upper plate 4 to decrease. At this time, since the lower end of the spring seat 233 presses against the upper surface of the upper tube seat 31 of the fuel assembly 3, the spring seat 233 moves along the axis of the first cavity 211 towards the hold-down rod 231, thereby compressing the hold-down spring 232, which causes the hold-down system 2 to provide an upward hold-down force.

During operation of the fuel assembly 3, the fixed associated assembly of this application must remain fixed under the hydraulic lifting force from the coolant of the reactor core and must not experience axial displacement. Since the hold-down force provided by the hold-down spring 232 in this application is upward, the following condition must be met to keep the associated assembly fixed and prevent axial displacement under the hydraulic lifting force:

Hydraulic lifting force + Spring hold-down force > Weight of the associated assembly.

Furthermore, since the hydraulic lifting force is generally much greater than the weight of the associated assembly, the fixed associated assembly of this application only requires ensuring that under cold conditions, the hold-down rod 231 remains in contact with the reactor core upper plate 4, meaning the spring hold-down force generated by the hold-down spring 232 within the hold-down system 2 is greater than the weight of the associated assembly. Compared to the prior art, which required the hold-down force to be greater than the hydraulic lifting force minus the weight, the required hold-down force for the fixed associated assembly of nuclear reactor core of this application is significantly reduced. This, on one hand, reduces the stress on the hold-down spring 232, effectively delaying its aging, extending its service life, and thereby extending the service life of the fixed associated assembly of nuclear reactor core. On the other hand, the size of the compression spring 232 can be reduced, eliminating the need to install double-layer springs on the outside of the center cylinder 21. This reduces the solid area of the supporting plate 22 used to support the double-layer springs on the outside of the center cylinder 21, thereby increasing the flow field area on the supporting plate 22 for the circulation of the coolant, and the pressure loss caused by the resistance of the supporting plate 22 when the coolant flows through the hold-down system 2 has been reduced.

In some embodiments, the central cylinder 21 further includes a second cavity 212 formed in the upper part of the internal cavity of the central cylinder 21. The second cavity 212 is in communication with the first cavity 211 and is located farther from the supporting plate 22 compared to the first cavity 211. Additionally, the wall of the second cavity 212 is provided with a lifting groove 2121. The lifting groove 2121 can engage with a lifting tool, enabling the lifting tool to lift and move the fixed associated assembly. In some embodiments, the dimensions of the lifting groove 2121 can be designed based on the lifting tool used for the control rods of the nuclear reactor, meaning the lifting groove 2121 can be compatible with the lifting tool for the reactor's control rods, allowing this assembly to share the lifting tool with the control rods.

It should be noted that in the prior art (as shown in the embodiment of Figure 1), since the spring assembly constantly applies a downward hold-down force on the supporting plate, the sum of the hold-down force and the weight of the associated assembly needed to be greater than the hydraulic lifting force to prevent the associated assembly from lifting under hydraulic forces during reactor operation. Typically, the hydraulic lifting force on the associated assembly is much greater than its weight. Ensuring no axial movement thus required a relatively large hold-down force. Therefore, in

the prior art, a double-layer spring was sleeved outside the central cylinder to increase the hold-down force. This double-layer spring sleeved outside the central cylinder resulted in a smaller diameter of the internal cavity of the central cylinder, making it inconvenient to design an internal lifting groove. Lifting, when required, could only be performed by attaching to the external hold-down rod, and cannot share the lifting tool with the control rods. However, as described earlier, in the embodiments of this application, a relatively small hold-down force is sufficient to prevent axial movement of the fixed associated assembly, allowing for a reduction in the size of the hold-down spring 232. Thus, there is no need to provide a spring outside the central cylinder 21. Consequently, the outer diameter of the central cylinder 21 can be increased to match that of a control rod central cylinder 21. The diameter of the internal cavity of the central cylinder 21 in the hold-down system 2 can also be increased accordingly. This allows the internal cavity of the central cylinder 21 in the hold-down system 2 to be designed with a second cavity 212 of the same size as that in control rod associated assembly, enabling the hold-down system 2 to share a lifting gripper with the control rod assembly.

**[0035]** In some embodiments, to facilitate the installation of the hold-down spring 232 into the first cavity 211, the central cylinder 21 is fabricated in segments. After assembling the hold-down spring 232 inside the internal cavity of the central cylinder 21, the segments of the central cylinder 21 are welded together. Specifically, referring to Figure 3, the central cylinder 21 comprises a first cylinder body 213 and a second cylinder body 214. The supporting plate 22 is fixedly connected to the second cylinder body 214. The internal cavity of the first cylinder body 213 includes a first sub-cavity, and the internal cavity of the second cylinder body 214 includes a second sub-cavity. When the first cylinder body 213 and the second cylinder body 214 are connected to form the central cylinder 21, the first sub-cavity and the second sub-cavity are in communication with each other to form the first cavity 211.

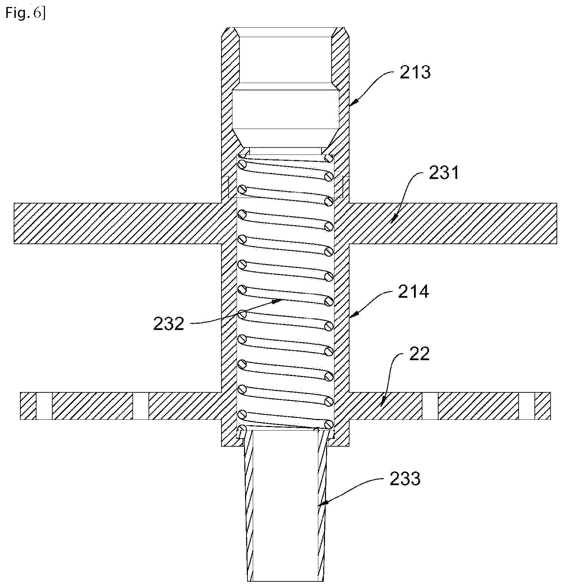

**[0036]** It should be noted that the hold-down rod 231 can be fixedly connected to the first cylinder body 213 (as in Figure 4) or to the second cylinder body 214 (as in Figure 6). For illustrative purposes, the assembly process of the fixed associated assembly is described below assuming the hold-down rod 231 is integrally formed with the first cylinder body 213, and the supporting plate 22 is integrally formed with the second cylinder body 214. Specifically, the first cylinder body 213 and the hold-down rod 231 are machined as one piece, and the second cylinder body 214 and the supporting plate 22 are machined as one piece. The spring seat 233 is assembled into the second sub-cavity of the second cylinder body 214, with one end of the spring seat 233 protruding from the second sub-cavity. One end of the hold-down spring 232 is assembled into the first sub-cavity of the first cylinder body 213, and the other end of the hold-down spring 232 is assembled into the second sub-cavity of the second cylinder body 214, with its bottom abutting the spring seat 233. Then, the first cylinder body 213 and the second cylinder body 214 are circumferentially welded together to form the central cylinder 21, and the first sub-cavity and the second sub-cavity jointly form the first cavity 211.

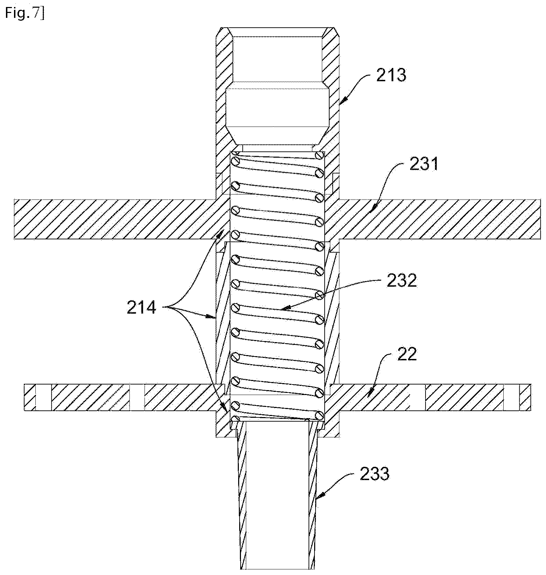

**[0037]** Furthermore, in some embodiments, the second cylinder body 214 can also be fabricated in multiple segments. Specifically, the second cylinder body 214 comprises at least two sub-cylinder bodies. Each sub-cylinder body has a cavity running through it along axial direction. When the multiple sub-cylinder bodies are connected to form the second cylinder body, the cavities of the multiple sub-cylinder bodies are in communication with each other to form the second sub-cavity, and every two adjacent sub-cylinder bodies are connected by circumferential welding. For example, as shown in Figure 7, the second cylinder body 214 comprises three sub-cylinder bodies. The hold-down rod 231 is fixedly connected to the first sub-cylinder body, which is farther from the fuel assembly 3. The supporting plate 22 is fixedly connected to the third sub-cylinder body. It should be noted that when the second cylinder body 214 comprises at least two sub-cylinder bodies, the multiple sub-cylinder bodies can first be circumferentially welded together to form the second cylinder body 214 (with their cavities communicating to form the second sub-cavity) before proceeding with the assembly steps described in the above embodiment. Alternatively, the hold-down spring 232 can be assembled into the cavities of the individual sub-cylinder bodies sequentially before circumferentially welding the multiple sub-cylinder bodies together. This is not limited here.

**[0038]** Certainly, in some embodiments, the first cylinder body 213 can also be divided into multiple segments with internal cavity sections, with at least one segmentation point, allowing the hold-down spring 232 to be placed inside before welding the segments together.

**[0039]** It is understandable that the various technical features described above can be used in any combination without restriction.

**[0040]** The above embodiments are only used to illustrate the present invention and are not intended to limit its patent scope. Any equivalent structural or process transformations made based on the content of the description and drawings of the present invention, or direct or indirect application in other related technical fields, shall similarly fall within the patent protection scope of the present invention.

## Claims

**1.** A fixed associated assembly of nuclear reactor core, comprising:

functional rods (1) configured to be inserted into guide cylinders of a fuel assembly (3) to achieve different

functions; and
a hold-down system (2) for securing and connecting the functional rods (1);
**characterized in that** the hold-down system (2) comprises:

a central cylinder (21) having an internal cavity; and
a supporting plate (22) fixedly connected to the central cylinder (21);
wherein the internal cavity of the central cylinder (21) comprises a first cavity (211), and the hold-down system (2) further comprises a hold-down structure (23), the hold-down structure (23) comprising a hold-down rod (231), a hold-down spring (232), and a spring seat (233);
wherein the hold-down spring (232) is filled within the first cavity (211), one end of the spring seat (233) is installed into the first cavity (211) and abuts against a lower end of the hold-down spring (232), and the other end of the spring seat (233) is configured to press against an upper tube seat (31) of the fuel assembly (3), the hold-down rod (231) is fixedly connected to the central cylinder (21) and is located on a side of the supporting plate (22) away from the spring seat (233), and the hold-down rod (231) is configured to abut against a side of a reactor core upper plate (4) of the nuclear reactor core that is close to the fuel assembly (3), so as to prevent axial movement of the associated assembly.

2. The fixed associated assembly of nuclear reactor core according to claim 1, **characterized in that** a stop member (2111) is provided within the first cavity (211), and the stop member (2111) abuts against an upper end of the hold-down spring (232).

3. The fixed associated assembly of nuclear reactor core according to claim 1, **characterized in that** the fuel assembly (3) undergoes irradiation growth during reactor operation, a gap between the fuel assembly (3) and the reactor core upper plate (4) decreases, and the spring seat (233) moves along an axis of the first cavity (211) towards the hold-down rod (231), thereby compressing the hold-down spring (232).

4. The fixed associated assembly of nuclear reactor core according to claim 1, **characterized in that** an end of the spring seat (233) proximate to the first cavity (211) is provided with a limiting protrusion (2331), a limiting member (2112) is provided on a wall of the first cavity (211), the limiting protrusion (2331) abuts against the limiting member (2112) to prevent the spring seat (233) from disengaging from the first cavity (211).

5. The fixed associated assembly of nuclear reactor core according to claim 1, **characterized in that** the internal cavity of the central cylinder (21) further comprises a second cavity (212) in communication with the first cavity (211), the second cavity (212) being located farther from the supporting plate (22) than the first cavity (211); wherein a wall of the second cavity (212) is provided with a lifting groove (2121).

6. The fixed associated assembly of nuclear reactor core according to claim 1, **characterized in that** the central cylinder (21) comprises a first cylinder body (213) and a second cylinder body (214), wherein the supporting plate (22) is fixedly connected to the second cylinder body (214);
an internal cavity of the first cylinder body (213) comprises a first sub-cavity, and an internal cavity of the second cylinder body (214) comprises a second sub-cavity, and when the first cylinder body (213) and the second cylinder body (214) are connected to form the central cylinder (21), the first sub-cavity and the second sub-cavity are in communication with each other to form the first cavity (211).

7. The fixed associated assembly of nuclear reactor core according to claim 6, **characterized in that** the second cylinder body (214) comprises at least two sub-cylinder bodies, each sub-cylinder body has a cavity running therethrough axially, when the plurality of sub-cylinder bodies are connected to form the second cylinder body (214), the cavities of the plurality of sub-cylinder bodies are in communication with each other to form the second sub-cavity.

8. The fixed associated assembly of nuclear reactor core according to claim 6, **characterized in that** the first cylinder body (213) and the second cylinder body (214) are connected by circumferential welding.

9. The fixed associated assembly of nuclear reactor core according to claim 7, **characterized in that** the sub-cylinder bodies are connected to each other by circumferential welding.

10. The fixed associated assembly of nuclear reactor core according to any one of claims 1 to 9, **characterized in that** the supporting plate (22) is provided with through holes (221) for coolant to pass through; and/or
the supporting plate (22) is further provided with mounting holes (222) for the functional rods (1) to pass through.

Fig.1]

Fig.2]

Fig. 3]

Fig.4]

Fig.[5]

Fig. 6]

Fig.7]

213

231

214

232

22

233

## INTERNATIONAL SEARCH REPORT

| International application No. |
|---|
| **PCT/CN2024/098791** |

**A.  CLASSIFICATION OF SUBJECT MATTER**

G21C3/33(2006.01)i

According to International Patent Classification (IPC) or to both national classification and IPC

**B.  FIELDS SEARCHED**

Minimum documentation searched (classification system followed by classification symbols)

G21C (IPC)

Documentation searched other than minimum documentation to the extent that such documents are included in the fields searched

Electronic data base consulted during the international search (name of data base and, where practicable, search terms used)

CNTXT, ENTXTC, DWPI: 反应堆, 堆芯, 固定, 组件, 燃料, 导向管, 上管座, 压紧, 弹簧, reactor, core, fix+, assembly, fuel, guide tube, upper nozzle, hold down, spring

**C.  DOCUMENTS CONSIDERED TO BE RELEVANT**

| Category* | Citation of document, with indication, where appropriate, of the relevant passages | Relevant to claim No. |
|---|---|---|
| PX | CN 116994779 A (CHINA NUCLEAR POWER INSTITUTE CO., LTD.) 03 November 2023 (2023-11-03) claims 1-10, description, paragraphs 0033-0050, and figures 1-7 | 1-10 |
| X | CN 109493983 A (SHANGHAI NUCLEAR ENGINEERING RESEARCH AND DESIGN INSTITUTE CO., LTD.) 19 March 2019 (2019-03-19) description, paragraphs 0002-0026, and figures 1-5 | 1-10 |
| X | CN 209328529 U (SHANGHAI NUCLEAR ENGINEERING RESEARCH AND DESIGN INSTITUTE CO., LTD.) 30 August 2019 (2019-08-30) description, paragraphs 0002-0026, and figures 1-5 | 1-10 |
| A | CN 203026145 U (NUCLEAR POWER INSTITUTE OF CHINA) 26 June 2013 (2013-06-26) entire document | 1-10 |
| A | CN 219180199 U (CHINA GENERAL NUCLEAR POWER CO., LTD. et al.) 13 June 2023 (2023-06-13) entire document | 1-10 |

☑ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **18 September 2024** | **20 September 2024** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2024/098791** |

**C.     DOCUMENTS CONSIDERED TO BE RELEVANT**

| Category* | Citation of document, with indication, where appropriate, of the relevant passages | Relevant to claim No. |
| --- | --- | --- |
| A | US 2016358675 A1 (CHINA NUCLEAR POWER TECHNOLOGY RESEARCH INSTITUTE CO., LTD.) 08 December 2016 (2016-12-08)<br>entire document | 1-10 |
| A | US 3770583 A (COMBUSTION ENGINEERING, INC.) 06 November 1973 (1973-11-06)<br>entire document | 1-10 |
| A | US 4828792 A (FRAGEMA FRAMATOME & COGEMA) 09 May 1989 (1989-05-09)<br>entire document | 1-10 |
| A | US 2009323887 A1 (LIU JIN et al.) 31 December 2009 (2009-12-31)<br>entire document | 1-10 |

Form PCT/ISA/210 (second sheet) (July 2022)

## INTERNATIONAL SEARCH REPORT
### Information on patent family members

International application No.

**PCT/CN2024/098791**

| Patent document cited in search report | | | Publication date (day/month/year) | Patent family member(s) | | | Publication date (day/month/year) |
|---|---|---|---|---|---|---|---|
| CN | 116994779 | A | 03 November 2023 | None | | | |
| CN | 109493983 | A | 19 March 2019 | None | | | |
| CN | 209328529 | U | 30 August 2019 | None | | | |
| CN | 203026145 | U | 26 June 2013 | None | | | |
| CN | 219180199 | U | 13 June 2023 | None | | | |
| US | 2016358675 | A1 | 08 December 2016 | FR | 3018626 | A1 | 18 September 2015 |
| | | | | FR | 3018626 | B1 | 09 April 2021 |
| US | 3770583 | A | 06 November 1973 | GB | 1389264 | A | 03 April 1975 |
| | | | | CA | 968077 | A | 20 May 1975 |
| | | | | AU | 4248672 | A | 22 November 1973 |
| | | | | AU | 469598 | B2 | 19 February 1976 |
| US | 4828792 | A | 09 May 1989 | JPS | 6238389 | A | 19 February 1987 |
| | | | | JP | 2553333 | B2 | 13 November 1996 |
| | | | | EP | 0214895 | A1 | 18 March 1987 |
| | | | | EP | 0214895 | B1 | 16 January 1991 |
| | | | | DE | 3676913 | D1 | 21 February 1991 |
| | | | | FR | 2589614 | A1 | 07 May 1987 |
| | | | | FR | 2589614 | B1 | 08 January 1988 |
| US | 2009323887 | A1 | 31 December 2009 | ATE | 535000 | T1 | 15 December 2011 |
| | | | | KR | 20090121216 | A | 25 November 2009 |
| | | | | KR | 101532441 | B1 | 29 June 2015 |
| | | | | ES | 2375687 | T3 | 05 March 2012 |
| | | | | EP | 2124230 | A2 | 25 November 2009 |
| | | | | EP | 2124230 | A3 | 27 January 2010 |
| | | | | EP | 2124230 | B1 | 23 November 2011 |
| | | | | ZA | 200902918 | B | 31 March 2010 |
| | | | | RU | 2009119170 | A | 27 November 2010 |
| | | | | RU | 2482557 | C2 | 20 May 2013 |
| | | | | JP | 2009282029 | A | 03 December 2009 |
| | | | | JP | 5452798 | B2 | 26 March 2014 |
| | | | | US | 7995701 | B2 | 09 August 2011 |

Form PCT/ISA/210 (patent family annex) (July 2022)